# EUROPEAN PATENT APPLICATION

(11) **EP 4 752 800 A1**
(43) Date of publication of application: **03.06.2026**
(21) Application number: 25219735.5
(22) Date of filing: 01.12.2025
(51) Int. Cl.: G06Q 10/0631, G05B 19/4065

(54) **MONITORING USAGE OF TOOLS**

(30) Priority: 02.12.2024 SE 2430617
(71) Applicant: Atlas Copco Industrial Technique AB, 105 23 Stockholm (SE)
(72) Inventor: Barkefors, Annea, 13138 Nacka (SE); Aldenfalk Jansson, Staffan, 703 45 Örebro (SE); Nieto, Stephan, 11330 Stockholm (SE); Englin, Albin, 824 55 Hudiksvall (SE); Klaesson, Filip, 57331 Tranås (SE)
(74) Representative: Atlas Copco Industrial Technique AB

(57) **Abstract**

The present disclosure relates to a method of monitoring usage of a group of tightening tools (10a-10e), and a device (20, 35) performing the method.

In an aspect, a method of a device (35) is provided of monitoring usage of a group of tightening tools (10a-10e). The method comprises acquiring (S101) data indicating a degree of utilization for the tools (10a-10e) over a time period, determining (S102) whether or not the acquired degree of utilization for at least one of the tools (10a) deviates from a set degree of utilization, and if so indicating (S103) a change of utilization pattern of said at least one tightening tool (10a) such that the degree of utilization of said at least one tightening tool (10a) complies with the set degree of utilization following the change.

## Description

### TECHNICAL FIELD

The present disclosure relates to a method of monitoring usage of a group of tightening tools, and a device performing the method.

Further, a computer program is provided comprising computer-executable instructions for causing the device to perform steps of the method when the computer-executable instructions are executed on a processing unit included in the device.

Moreover, a computer program product is provided comprising a computer readable medium, the computer readable medium having the computer program embodied thereon.

### BACKGROUND

When utilizing a torque-applying electrical tool such as a tightening tool configured to tightening of fasteners such as bolts or screws, the tool will eventually start to wear, which may lead to inferior-quality tightenings and even tool breakdown.

This may in its turn cause production downtime since the tool may have to be taken out of production and subjected to maintenance. To avoid any such scenarios, it is important that the tool is managed in accordance with recommendations of the tool manufacturer.

### SUMMARY

One objective is to solve, or at least mitigate, this problem in the art and thus to provide an improved method of monitoring usage of a group of tightening tools.

This objective is attained in a first aspect by a method of a device of monitoring usage of a group of tightening tools. The method comprises acquiring data indicating a degree of utilization for the tools over a time period, determining whether or not the acquired degree of utilization for at least one of the tools deviates from a set degree of utilization, and if so indicating a change of utilization pattern of said at least one tightening tool such that the degree of utilization of said at least one tightening tool complies with the set degree of utilization following the change.

This objective is attained in a second aspect by a device configured to monitor usage of a group of tightening tools, the device comprising a processing unit operative to cause the device to acquire data indicating a degree of utilization for the tools over a time period, determine whether or not the acquired degree of utilization for at least one of the tools deviates from a set degree of utilization, and if so to indicate a change of utilization pattern of said at least one tightening tool such that the degree of utilization of said at least one tightening tool complies with the set degree of utilization following the change.

Advantageously, in embodiment, better balance in tool utilization is attained and the risk of tool wear may also be decreased. Thus, proposed embodiments enable detecting overutilized and/or underutilized tools. Some embodiments described herein may further suggest swaps and rotations to balance tool load.

In an embodiment, the determining whether or not the acquired degree of utilization for at least one of the tools deviates from a set degree of utilization comprises determining that the acquired degree of utilization exceeds an upper utilization threshold value, and the indicating of a change of the utilization pattern of said at least one tightening tool such that the degree of utilization of said at least one tightening tool complies with the set degree of utilization following the change comprises decreasing the utilization of said at least one tool such that the set degree of utilization is complied with following the change.

In an embodiment, the determining whether or not the acquired degree of utilization for at least one of the tools deviates from a set degree of utilization comprises determining that the acquired degree of utilization is below a lower utilization threshold value, and the indicating of a change of the utilization pattern of said at least one tightening tool such that the degree of utilization of said at least one tightening tool complies with the set degree of utilization following the change comprises increasing the utilization of said at least one tool such that the set degree of utilization is complied with following the change.

In an embodiment, the determining whether or not the acquired degree of utilization for at least one of the tools deviates from a set degree of utilization comprises determining that the acquired degree of utilization exceeds an upper utilization threshold value for at least one of the tools, and being below a lower utilization threshold value for at least one other of the tools; and the indicating that a change of the utilization pattern of said at least one tightening tool such that the degree of utilization of said at least one tightening tool complies with the set degree of utilization following the change comprises, indicating a swap of workstations of the at least one tool for which the utilization exceeds the upper utilization threshold value and the at least one other tool for which the utilization is below the lower utilization threshold value.

In an embodiment, the acquiring of data indicating a degree of utilization comprises acquiring data indicating value of an operational parameter of the tools during multiple tightening operations having been performed by the tools, wherein the determining whether or not the acquired degree of utilization for at least one of the tools deviates from the set degree of utilization comprises, determining whether or not the value of the operational parameter deviates from a set value; and if so, the indicating of a change of the utilization pattern comprises indicating a swap of workstations to be performed for the at least one tool for which said value exceeds an upper operational parameter threshold value and at least one other tool for which said value is below a lower operational parameter threshold value.

In an embodiment, the method comprises determining whether or not the operational parameters of the tools to be swapped comply with operational requirements of the workstation to which the tools are to be transferred, and if so the swap is indicated while if not the swap is not indicated.

In an embodiment, rotation of the tools to new workstations are indicated if said rotation results in the degree of utilization complying with the set degree of utilization for all tools following the rotation.

In an embodiment, the operational parameter comprises one or more of torque, speed or rotation angle applied by the tools to fasteners during tightening operations, current consumption and ergonomics of operators of the tools.

In an embodiment, the operational parameter of the tools is represented by average final torque applied to fasteners during multiple tightening operations in relation to a maximum applicable torque by the respective tool.

In an embodiment, the time period is represented by a number of tightening operations having been performed by the group of tools.

In an embodiment, an alert is provided indicating that the utilization pattern of said at least one tightening tool should be changed.

In a third aspect, a computer program is provided comprising computer-executable instructions for causing a tightening tool to perform steps recited in the method of the first aspect when the computer-executable instructions are executed on a processing unit included in the tightening tool.

In a fourth aspect, a computer program product is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 illustrates a tightening tool configured to apply a torque to a fastener, in which tool embodiments may be implemented;
Figure 2 illustrates a group of tools communicating with a cloud server in an embodiment;
Figure 3 shows a flowchart illustrating a method of monitoring usage of a group of tightening tools according to an embodiment;
Figure 4 shows a flowchart illustrating a method of monitoring usage of a group of tightening tools according to an embodiment;
Figure 5 shows a flowchart illustrating a method of monitoring usage of a group of tightening tools according to an embodiment;
Figure 6 shows a flowchart illustrating a method of monitoring usage of a group of tightening tools according to an embodiment;
Figure 7 shows a flowchart illustrating a method of monitoring usage of a group of tightening tools according to an embodiment; and
Figure 8 shows a flowchart illustrating a method of monitoring usage of a group of tightening tools according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

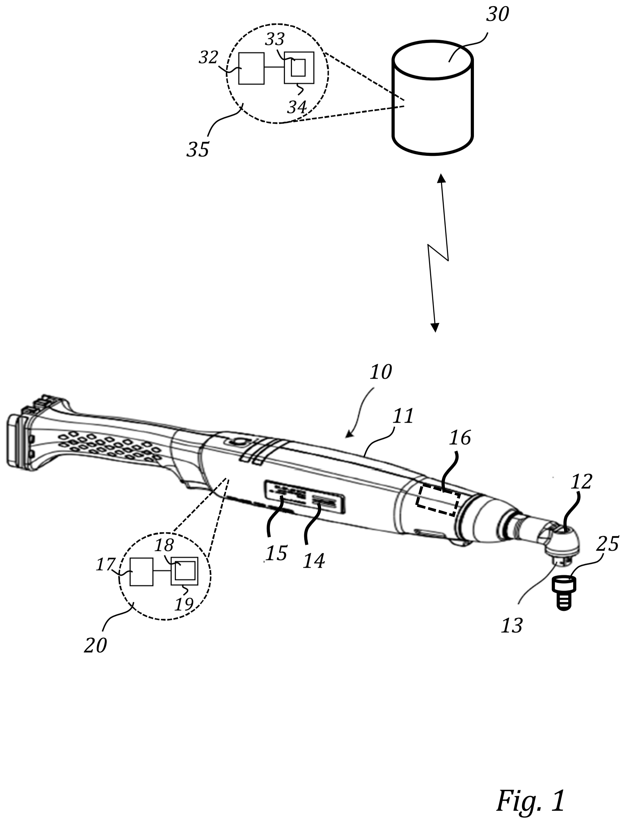

Figure 1 illustrates an industrial tool in the form of a tightening tool 10 configured to apply a torque to a fastener such as a bolt 25 for tightening a joint, for which tool embodiments may be implemented.

The tightening tool 10 may be cordless or electrically powered via a cord and has a main body 11 and a tool head 12. The tool head 12 has an output shaft 13 with a socket (not shown) configured to be rotatably driven by an electric motor 16 arranged inside the main body 11 to apply the torque to the bolt 25.

The tightening tool 10 may be arranged with a display 14 via which an operator of the tool 10 may be presented with information relating to operation of the tool 10, and an interface 15 via which the operator may input data to the tool 10.

The tightening tool 10 may further be equipped with a communication device in the form of a radio transmitter/receiver (not shown) for wirelessly transmitting operational data, such as applied torque, angles and/or current consumption to a remotely located controller such as a cloud server 30 or a device such as a server executing on the premises. Alternatively, communication between the tool 10 and the controller 30 may be undertaken via a wired connection.

Thus, the tool 10 may for instance communicate measured operational data to the controller 30 for further evaluation while the controller 30 e.g. may send operational settings to be applied by the tool 10 or instructions to be displayed to the operator via the display 14, or even automatically configure the tool 10. As is understood, the method of determining a configuration of the tool 10 according to embodiments may be performed in the tool 10 or in the cloud server 30 (or even in combination where some steps are performed in one device and others are performed in the other). Thus, the tool 10 is typically equipped with a control device 20 and the cloud server 30 comprises a similar control device 35 housing the same or similar data processing components, as will be described in the following.

The steps of the method to be described in the following as performed by the tool 10 and/or the cloud server 30 are in practice performed by a control device 20 and/or 35, respectively, comprising a processing unit 17, 32 embodied in the form of one or more microprocessors arranged to execute a computer program 18, 33 downloaded to a storage medium 19, 34 associated with the microprocessor, such as a Random Access Memory (RAM), a Flash memory or a hard disk drive. The processing unit 17, 32 is arranged to cause the tool 10 and/or cloud server 30 to carry out the method according to embodiments when the appropriate computer program 18, 33 comprising computer-executable instructions is downloaded to the storage medium 19, 34 and executed by the processing unit 17, 32. The storage medium 19, 34 may also be a computer program product comprising the computer program 18, 33. Alternatively, the computer program 18 may be transferred to the storage medium 19, 34 by means of a suitable computer program product, such as a Digital Versatile Disc (DVD) or a memory stick. As a further alternative, the computer program 18, 33 may be downloaded to the storage medium 19, 34 over a network. The processing unit 17, 32 may alternatively be embodied in the form of a digital signal processor (DSP), an application specific integrated circuit (ASIC), a field-programmable gate array (FPGA), a complex programmable logic device (CPLD), etc. The control device 20, 35 is communicatively connected to the interface for external communication, for instance from the tool 10 to the cloud server 30 and vice versa.

The control device 20 may be arranged inside the tightening tool 10 or in connection to the tool 10, for instance as a control device 20 attached to an external side of the main body 11 of the tool 10.

The processing unit 17 is in communicative connection with one or more internal sensors (not shown) for measuring the torque applied to the bolt 25 and a rotation angle of the output shaft 13 of the tightening tool 10 upon applying the torque, as well as a sensor measuring current consumption of the tool 10.

Now upon an operator using the tightening tool 10 to tighten a fastener such as the bolt 25, it is important that the tightening operation is performed correctly for the tightened bolt 25 to maintain its fastening durability. If not, there is a risk that the tightening becomes poor which in worst case may cause the bolt 25 to unscrew. Thus, it is crucial that the bolt 25 is correctly tightened and if not, it is desirable to attain an indication accordingly such that the operator may utilize the tool 10 to correctly retighten the bolt 25. Commonly, an incorrect tightening is referred to as a not ok (NOK) tightening, while a correct tightening conversely is referred to as OK.

Over time, the tool 10 will start to wear, which may lead to inferior-quality tightenings.

If the tool 10 is subjected to substantial wear, the wear may even cause tool breakage, which is highly undesirable. This will typically cause production downtime since the tool will have to be taken out of production and subjected to maintenance. To avoid any such scenarios, it is important that the tool is managed in accordance with recommendations of the tool manufacturer.

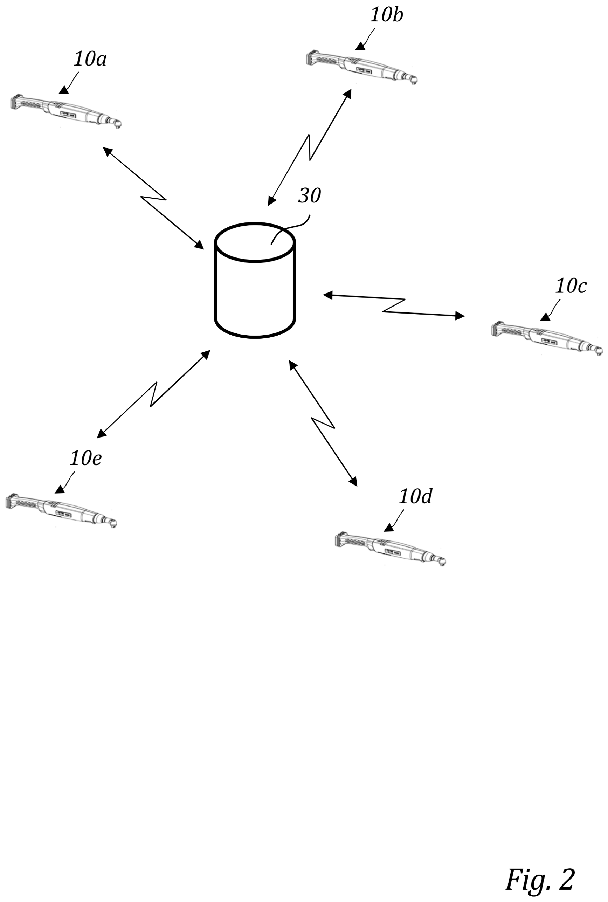

With reference to Figure 2, assuming a setup where a group of five tools 10a-10e are utilized e.g. at a plant or workshop premises where each tool is utilized at a workstation for tightening fasteners such as a bolts. Further shown is the cloud server 30 being configured to wirelessly communicate with each tool 10a-10e.

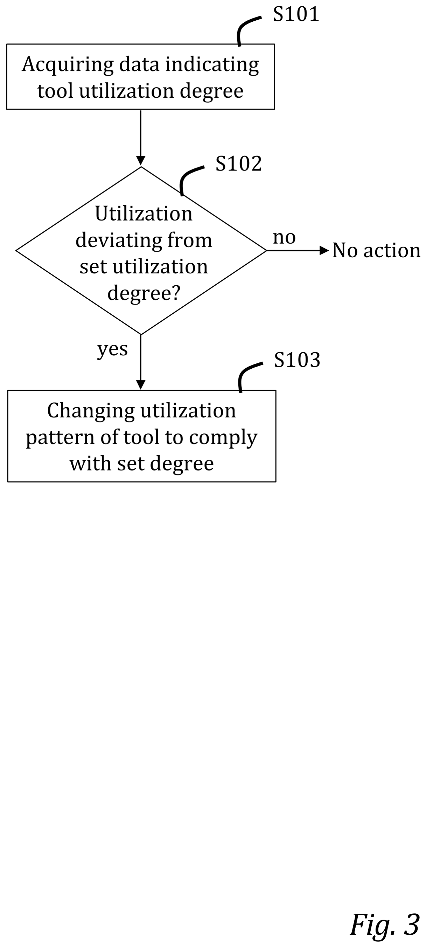

Figure 3 illustrates a flowchart of a method of monitoring usage of the group of tightening tools 10a-10e according to an embodiment. In this exemplifying embodiment, the control device 35 of the server 30 is configured to perform the steps of the method.

In a first step S101, the control device 35 acquires, for the tools 10a-10e of the group, data indicating a degree of utilization for tools 10a-10e over a given time period, such as the last 24 hours. As is understood, rather than determining degree of utilization over a given time span, it may alternatively be determined over a given number of tightening operations having been performed, such as e.g. the last 500 tightening operations undertaken by one or more of the tools 10a-10e.

Assuming that during the last 24 hours, the utilization degree of the tools 10a-10e, in this example embodiment in the form of the number of tightening operations having been performed, are as follows:

**Table 1. Utilization degree of each tool during the last 24 hours.**

| Tool | Number of tightenings |
|---|---|
| 10a | 1440 |
| 10b | 720 |
| 10c | 715 |
| 10d | 710 |
| 10e | 230 |

As can be seen in Table 1, first tool 10a is by far utilized to the highest degree with 1440 tightenings undertaken over the last 24 hours, i.e. at an average of one tightening per minute, while second tool 10b, third tool 10c and fourth tool 10d each are utilized just over 700 times, and fifth tool 10e clearly is utilized to a lowest degree at 230 tightening over the last 24 hours.

In S102, the control device 35 determines from the acquired data (which may be continuously collected from the tools 10a-10e during the given time period) whether or not the acquired degree of utilization for one or more of the tools 10a-10e deviates from a set desired degree of utilization.

If so, the control device 35 causes in S103 determines a suggested change in utilization pattern of the one or more deviating tools 10a-10e, thereby making the degree of utilization to comply with said set desired degree of utilization following the change.

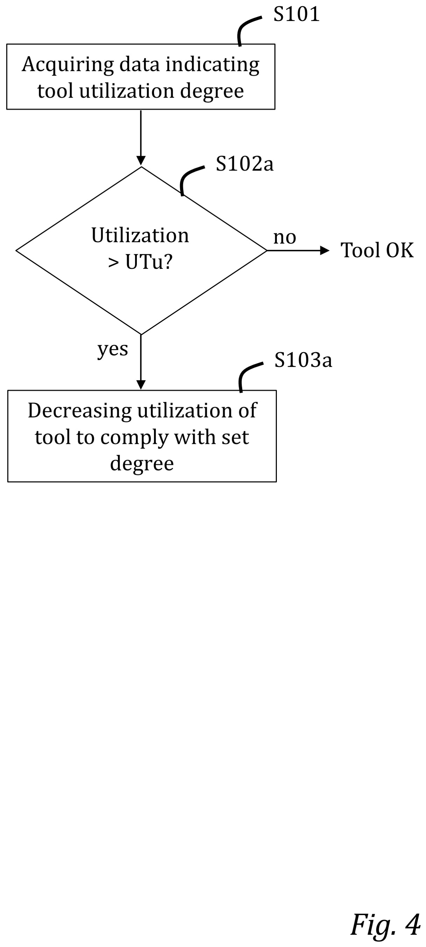

For instance, as illustrated in the flowchart of Figure 4 in line with the above example of Table 1, it may in an embodiment be that a tool preferably should not have a utilization degree exceeding a preconfigured upper utilization threshold value UTu of, say, UTu = 1350 as determined in S102a. If so, the risk of wear is considered high, in which case the control device 35 in S103a causes the utilization pattern of the first tool 10a to change, e.g. by setting a tightening limit of the first tool 10a such that the first tool 10a will not be capable of performing more than 1350 tightening operations during the next 24-hour period.

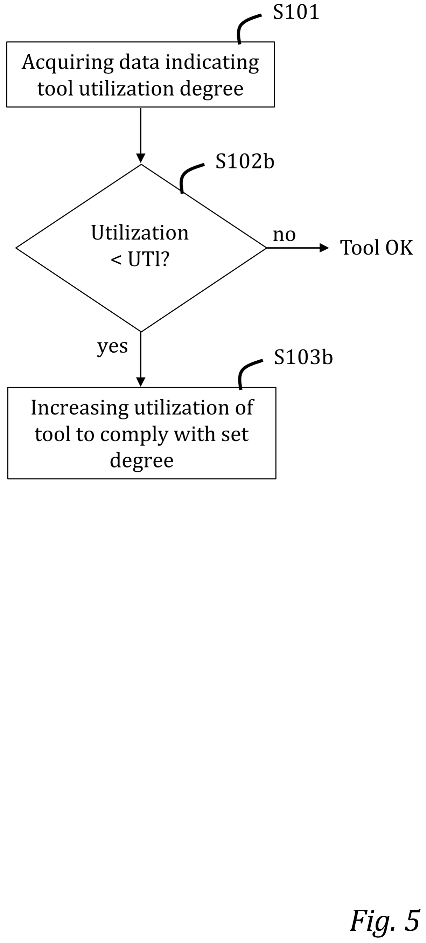

In contrast, in another embodiment as illustrated in the flowchart of Figure 5, it may be that a tool preferably should not have a utilization degree falling below a preconfigured lower utilization threshold value UTl of, say, UTl = 300 as determined in S102b. If so, the tool is considered underutilized, and the use of the tool should hence be increased. The control device 35 will thus in S103b suggest that the utilization pattern of the fifth tool 10e is changed, e.g. alerting an operator that the fifth tool 10e should be used more often during the next 24-hour period. This may also serve as an inventory alert, wherein in case the tool 10e is underutilized to a too high degree, the plant supervisor may consider taking the fifth tool 10e out of production, possibly swapping the fifth tool 10e for a more usable tool. Advantageously, it may be envisaged that the control device 35 acquires production data from all the connected tools 10a-10e at the plant and generates a list of suggested tool swaps and rotations that will improve the tool utilization.

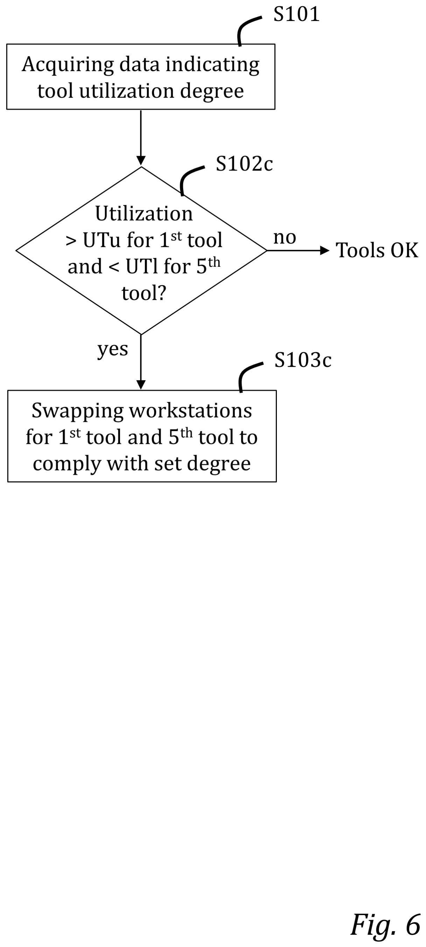

In yet another embodiment illustrated in the flowchart of Figure 6, the control device 35 may in S102c determine that the acquired degree of utilization for one or more of the tools 10a-10e deviates from the desired degree of utilization since there is a great discrepancy between the utilization degrees of the first tool 10a and the fifth tool 10e (i.e. the first tool 10a having a utilization degree exceeding UTu while the fifth tool 10e has a utilization degree being below UTl), and that such a discrepancy indicates an imbalance in utilization of the two tools 10a, 10e.

If so, the control device 35 may in S103c advantageously suggest the first tool 10a to be swapped against the fifth tool 10e by alerting an operator of the tools accordingly, i.e. that the first tool 10a is to be transferred to the workstation of the fifth tool 10e while the fifth tool 10e accordingly is to be transferred to the workstation of the first tool 10a. Thus, during the next 24 hours, using the numbers of Table 1, it may be assumed that around 230 tightenings conversely are performed for the first tool 10a while around 1440 tightenings are performed for the fifth tool 10e. As is understood, this assumes that the tools 10a, 10e indeed are capable of swapping workstations with each other, for instance that the first tool 10a has capacity to apply a torque required at the workstation of the fifth tool 10e or vice versa.

Advantageously, with these exemplifying embodiments, the risk of tool wear is greatly decreased and a better balance in tool utilization is attained.

Again with reference to Figure 1, upon operating the tool 10 to apply a high torque to the bolt 25 relative to a maximum applicable torque, the tool 10 will typically wear out faster and the risk for inferior tightenings and even sudden breakdown increases. On the other hand, if the tool 10 is operated to apply a low torque relative to the maximum applicable torque, the accuracy of the tool will generally deteriorate, thereby causing degradation in precision and tightening quality. In an embodiment to be described in the following, improvement and even optimization of tool usage is attained, and thus expected lifetime of the tool 10 can be increased while also improving tool accuracy across the entire plant.

In this embodiment, it is assumed that the control device 35 in S101 acquires data indicating utilization degree of the tools 10a-10e in the form of final torque applied to a fastener during multiple tightening operations, such has e.g. during the last 24 hours or corresponding to the last 500 tightenings. As is understood, other operational parameters than torque may be take into account, such as rotational speed or angle, current consumption, and even ergonomics of an operator of the tool, etc., thereby allowing optimal utilization of the tools from an overall perspective.

Assuming that the maximum torque that can be applied by each tool to a fastener to be tightened differs among at least some of the tools. For instance, in Table 2 below, it is assumed that the first tool 10a has a maximum torque limit of 50 Nm while the second tool 10b has a maximum limit of 30 Nm and the remaining tools 10b-10e are capable of applying a maximum torque of 100 Nm In this example the degree of utilization is:

**Table 2. Applied torque of each tool during the last 500 tightenings.**

| Tool | Average final tightening torque / maximum tightening torque |
|---|---|
| 10a | 0.86 (max. 50 Nm) |
| 10b | 0.53 (max. 30 Nm) |
| 10c | 0.46 (max. 100 Nm) |
| 10d | 0.51 (max. 100 Nm) |
| 10e | 0.27 (max. 100 Nm) |

As can be seen in Table 2, first tool 10a by far applies the highest final torque in relation to the maximum applicable torque out of the five tools 10a-10e, i.e. 0.86 or an applied average final torque of 43 Nm given a maximum torque of 50 Nm, while the second tool 10b, the third tool 10c and the fourth tool 10d applies an average final torque of 0.52, 0.46 and 0.51, respectively, of the maximum torque (i.e. about half of the maximum torque), and the fifth tool 10e applies the lowest torque of 0.27 with respect to the maximum torque, i.e. an average final torque of 27 Nm given the maximum torque of 100 Nm. As is understood, in the case of e.g. the first tool 10a, the final torque applied will sometimes overshoot to e.g. 44 Nm and sometimes undershoot at 42 Nm while during most tightenings amount to 43 Nm. The average final torque applied by the first tool 10a will thus amount to 43 Nm, or 0.86 of the maximum applicable torque of 50 Nm for the first tool 10a.

In other words, the first tool 10a will generally be subjected to more wear than the other tools, in particular as compared to the fifth tool 10e, which is only operated to apply an average final torque of 0.27 of the maximum applicable torque, i.e. 27 Nm of the maximum torque of 100 Nm, the low average final torque potentially resulting in precision issues.

To mitigate this undesired scenario, the control device 35 will suggest a change in the utilization pattern of the first tool 10a and the fifth tool 10e as will be described in the following.

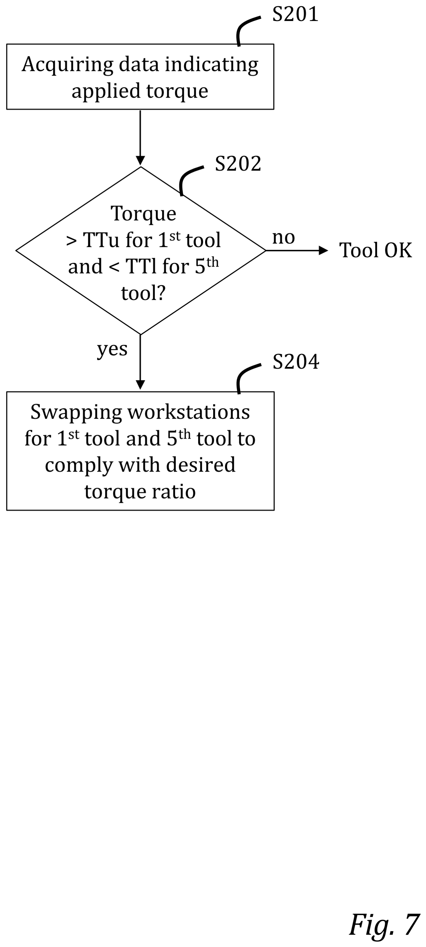

Reference is made to Figure 7 showing a flowchart where the control device 35 in S201 acquires data from the group of tools 10a-10e indicating applied average final torque in relation to the maximum applicable torque over a number of performed tightening operations.

In S202, the control device 35 determines from the data acquired in S201 whether or not the acquired degree of utilization for one or more of the tools 10a-10e deviates from a set desired degree of utilization.

For instance, in line with the above example of Table 2, it may in an embodiment be that a tool preferably should not have a too high utilization degree, in this example embodied by average final torque being applied relative to maximum applicable torque over a given number of tightenings, such as e.g. 500 tightenings. In this embodiment, a set upper torque threshold value TTu of, say, TTu = 0.80 should not be exceeded as determined in S202. If so, the risk of wear is considered high, in which case the control device 35 subsequently in S204 may cause the utilization pattern of the first tool 10a to change, e.g. by suggesting a swap of workstations for the first tool 10a will be described in the following.

In order to effect such tool swap, it may be that a tool is found which has a too low utilization degree, i.e. a too low average final torque being applied relative to its maximum applicable torque over 500 tightenings. In this embodiment, the applied average final torque should not fall below a preconfigured lower torque threshold value TTl of, say, TTl = 0.35 as determined in S202. If so, the tool is considered underutilized, and the average final torque applied by the tool should hence be increased. The control device 35 may thus in S204 indicate that the utilization pattern of the fifth tool 10e should be changed, e.g. alerting an operator that the fifth tool 10e should be operated to apply a higher torque during upcoming tightening operations. As previously mentioned, this may serve as an inventory alert, wherein in case the fifth tool 10e is underutilized to a too high degree, the plant supervisor may consider taking the fifth tool 10e out of production, possibly swapping the fifth tool 10e for a more usable tool. However, in this particular example, the control device will determine whether or not a tool swap is possible, i.e. that the first tool 10a can be transferred to operate at the workstation of the fifth tool 10e while the fifth tool 10e is transferred to operate at the workstation of the first tool 10a.

As is understood, the first tool 10a is not necessarily swapped with a tool having a too low utilization degree (exemplified by the fifth tool 10e); it could well be swapped with another tool, such as third tool 10c, since the utilization degree of the first tool 10a still will be improved (while the utilization degree of the third tool 10c still is adequate if not necessarily improved). If so, step S202 may include checking whether or not the set upper torque threshold value TTu is exceeded for the first tool 10a, but that no checking against a lower torque threshold value TTl is performed. However, in the particular example of Table 2, a swap with the fifth tool 10e is typically preferred since both the utilization degree of the first tool 10a and that of the fifth tool 10e is greatly improved. Similarly, it may be that the fifth tool 10e having a too low utilization degree is swapped for a tool other than the first tool 10a (e.g. the third tool 10c), thereby improving the utilization degree of the fifth tool 10e while still providing an adequate (but not necessarily improved) utilization degree for the third tool 10c. If so, step S202 may include checking whether or not the applied average final torque of the fifth tool 10e falls below the lower torque threshold value TTl, but that no checking against an upper torque threshold value TTu is performed. In other words, a tool may be swapped with another tool either if the utilization degree of the tool exceeds an upper threshold value or falls below a lower threshold value. Further, it may be advantageous to swap a tool having a high utilization degree with another tool having a low utilization degree to improve the utilization degree of both tools, but that other swaps are envisaged.

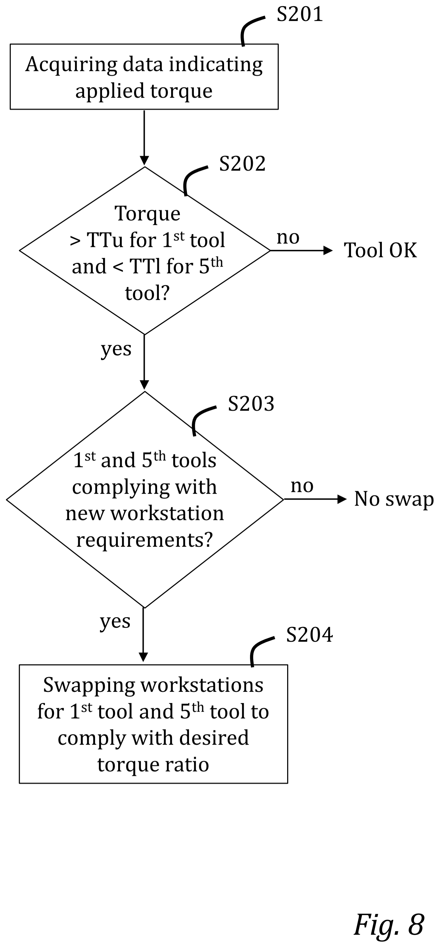

In still an embodiment illustrated with the flowchart of Figure 8, the control device 35 determines in S202 that the applied torque for one or more of the tools 10a-10e deviates from the desired level of torque being applied in relation to the maximum applicable torque since there is a great discrepancy between the applied torques of the first tool 10a and the fifth tool 10e (i.e. the first tool 10a applies a torque exceeding TTu while the fifth tool 10e applies a torque being below TTl), and that such a discrepancy indicates an imbalance in torque application and thus utilization of the two tools 10a, 10e.

If so, the control device 35 may in S204 advantageously suggest the first tool 10a to be swapped against the fifth tool 10e by alerting an operator of the tools accordingly, i.e. that the first tool 10a is to be transferred to the workstation of the fifth tool 10e while the fifth tool 10e accordingly is to be transferred to the workstation of the first tool 10a.

However, unless it is already known the swap indeed can be performed, an optional step S203 will precede the swapping step S204. In this example, with reference to Table 2, the first tool 10a is configured to apply an average final torque of 43 Nm at its workstation while the fifth tool is configured to apply an average final torque of 27 Nm at its workstation.

In other words, the first tool 10a is indeed capable of applying the desired average final torque of 27 Nm as required at the workstation where the fifth tool 10e currently operates. Similarly, the fifth tool 10e is capable of applying the desired average final torque of 43 Nm as required at the workstation where the first tool 10a currently operates. The control device 35 will thus conclude in S203 that a swap indeed is possible.

Hence, the control device 35 suggests a tool swap in S204 where the first tool 10a is transferred to operate at the workstation where the fifth tool 10e currently operates, while the fifth tool 10e is transferred for operation at the workstation where the first tool 10a currently operates.

Advantageously, the utilization of the tools 10a, 10e is greatly improved, since the first tool 10a after the swap is configured to apply an average final torque of 27 Nm, resulting in a torque ratio of 27/50 = 0.54, while the fifth tool 10e after the swap is configured to apply an average final torque of 43 Nm, resulting in a torque ratio of 43/100 = 0.43. Clearly, a better balance in tool utilization is attained.

While the above embodiment with refence to Figure 7 indicates a swap of two tools 10a, 10e, alternatively a rotation of tools may be performed, if such rotation is deemed more appropriate, where e.g. the first tool 10a is transferred to the work station of the second tool 10b, the second tool 10b is transferred to the workstation of the third tool 10c, and so on.

A torque ratio of around 50% for all tools may be a preferred scenario.

Thus, in this particular example, the tools 10a, 10e can indeed be swapped since the two tools 10a, 10e are capable of applying the torque required at the respective workstation. That is, the tools 10a, 10e comply with demands set by the respective new workstation to which the tools 10a, 10e are transferred. However, considering e.g. the second tool 10b, which is capable of maximally applying a torque of 30 Nm; a torque of 30 Nm is insufficient for operation at the workstation where the first tool 10a operated before the swap, since a torque of 43 Nm is required. Hence, such swap is not possible as will be concluded by the control device 35 in S203.

If the second tool 10b was to be transferred to the workstation where the fifth tool 10e operated before the swap, such swap would theoretically be possible, since the required torque to be applied amounts to 27 Nm. However, that would result in a torque ratio of 27/30 = 0.90, which would be undesirable. Again, the control device 35 will conclude in S203 that the swap is not possible (or at least not recommended).

In other words, the control device 35 determines in S203 whether or not the applicable torque of the tools 10a. 10e to be swapped comply with operational requirements of the workstation to which the tools 10a, 10e are to be transferred, and if so the swap is indicated while if not, the swap is not indicated.

Advantageously, with this exemplifying embodiment, the risk of tool wear is greatly decreased and a better balance in tool utilization is attained. Thus, the proposed method enables detecting overutilized and/or underutilized tools and may suggest swaps and rotations to balance the tool load. For example, the method can be used in order to initially find the optimal tool placement for a new plant, or as part of continuous process once the plant is setup, such as suggesting substitution tools upon performing service, where a tool to be serviced should be swapped for a suitable inventory tool.

In an embodiment, a trained machine-learning (ML) model or artificial intelligence (AI) may be used to determine degree of tool utilization and any changes in utilization patterns such as swapping of tools.

Any such ML and/or AI operations, as well as the performing of the steps of the method according to embodiments may be performed locally by the control device 20, or by the control device 35 of cloud server 30. The determining of whether or not a tool utilization pattern should be changed may be immediately communicated to the operator of the tool 10 via e.g. the display 14.

It is envisaged that the steps of the method according to embodiments may be performed by the control device 20 arranged in the tool 10 itself. However, it may also be envisaged that data such as torque or tool operational time, number of tightenings, etc., is measured by the tool 10 and then communicated via wireless transmitter to the cloud server 30 being equipped with a corresponding control device 35 for performing all steps, which would relieve the processing unit 17 of the tool 10 from the computational burden. In an embodiment, all tools 10a-100 on the premises communicate with the cloud server 30.

In an embodiment, an alert that the utilization pattern of the tool 10 should be changed, e.g. increasing/decreasing torque or swapping tools, may be provided to an operator of the tightening tool, to the tightening tool itself, to a supervision control room or to the remote cloud server 30.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A method of a device (35) of monitoring usage of a group of tightening tools (10a-10e), the method comprising:
acquiring (S101) data indicating a degree of utilization for the tools (10a-10e) over a time period;
determining (S102) whether or not the acquired degree of utilization for at least one of the tools (10a) deviates from a set degree of utilization; and if so
indicating (S103) a change of utilization pattern of said at least one tightening tool (10a) such that the degree of utilization of said at least one tightening tool (10a) complies with the set degree of utilization following the change.

2. The method of claim 1, wherein the determining (S102) whether or not the acquired degree of utilization for at least one of the tools (10a) deviates from a set degree of utilization comprises:
determining (S102a) that the acquired degree of utilization exceeds an upper utilization threshold value (UTu); and the indicating (S103) of a change of the utilization pattern of said at least one tightening tool (10a) such that the degree of utilization of said at least one tightening tool (10a) complies with the set degree of utilization following the change comprises:
indicating a decrease (103a) of the utilization of said at least one tool (10a) such that the set degree of utilization is complied with following the change.

3. The method of claims 1 or 2, wherein the determining (S102) whether or not the acquired degree of utilization for at least one of the tools (10e) deviates from a set degree of utilization comprises:
determining (S102b) that the acquired degree of utilization is below a lower utilization threshold value (UTl); and the indicating (S103) of a change of the utilization pattern of said at least one tightening tool (10e) such that the degree of utilization of said at least one tightening tool (10e) complies with the set degree of utilization following the change comprises:
indicating an increase (103b) of the utilization of said at least one tool (10e) such that the set degree of utilization is complied with following the change.

4. The method of claims 2 and 3, wherein the determining (S102) whether or not the acquired degree of utilization for at least one of the tools (10a, 10e) deviates from a set degree of utilization comprises:
determining (S102c) that the acquired degree of utilization exceeds an upper utilization threshold value (UTu) for at least one of the tools (10a), and being below a lower utilization threshold value (UTl) for at least one other of the tools (10e); and the indicating (S103) that a change of the utilization pattern of said at least one tightening tool (10a, 10e) such that the degree of utilization of said at least one tightening tool (10e, 10e) complies with the set degree of utilization following the change comprises:
indicating a swap of workstations of the at least one tool (10a) for which the utilization exceeds the upper utilization threshold value (UTu) and the at least one other tool (10e) for which the utilization is below the lower utilization threshold value (UTl).

5. The method of any one of the preceding claims wherein the acquiring (S101) of data indicating a degree of utilization comprises:
acquiring (S201) data indicating value of an operational parameter of the tools (10a-10e) during multiple tightening operations having been performed by the tools (10a-10e); wherein the determining (S102) whether or not the acquired degree of utilization for at least one of the tools (10a) deviates from the set degree of utilization comprises:
determining (S202) whether or not the value of the operational parameter deviates from a set value; and if so, the indicating (S103) of a change of the utilization pattern comprises:
indicating a swap (S204) of workstations to be performed for at least one tool (10a) for which said value exceeds an upper operational parameter threshold value (TTu) and at least one other tool (10e) for which said value is below a lower operational parameter threshold value (TTl).

6. The method of claim 5, further comprising:
determining (S203) whether or not the operational parameters of the tools (10a. 10e) to be swapped comply with operational requirements of the workstation to which the tools (10a, 10e) are to be transferred, and if so the swap is indicated while if not the swap is not indicated.

7. The method of any one of the preceding claims, wherein a rotation of the tools (10a-10e) to new workstations is indicated (S103) if said rotation results in the degree of utilization complying with the set degree of utilization for all tools following the rotation.

8. The method of claims 5 or 6, wherein the operational parameter comprises one or more of torque, speed or rotation angle applied by the tools (10a-10e) to fasteners (25) during tightening operations, current consumption and ergonomics of operators of the tools.

9. The method of any one of claims 5-7, wherein the operational parameter of the tools (10a-10e) is represented by an average final torque or target torque applied to fasteners during multiple tightening operations in relation to a maximum applicable torque by the respective tool.

10. The method of any one of the preceding claims, wherein said time period is represented by a number of tightening operations having been performed by the group of tools (10a-10e).

11. The method of any one of the preceding claims, further comprising providing an alert indicating that the utilization pattern of said at least one tightening tool (10a) should be changed (S103).

12. A computer program (18, 33) comprising computer-executable instructions for causing the device (20, 35) to perform steps recited in any one of claims 1-11 when the computer-executable instructions are executed on a processing unit (17, 32) included in the device (20, 35).

13. A computer program product comprising a computer readable medium (19, 34), the computer readable medium having the computer program (18, 33) according to claim 12 embodied thereon.

14. A device (20, 35) configured to monitor usage of a group of tightening tools (10a-10e), the device (20, 35) comprising a processing unit (17, 32) operative to cause the device (20, 35) to:
acquire (S101) data indicating a degree of utilization for the tools (10a-10e) over a time period;
determine (S102) whether or not the acquired degree of utilization for at least one of the tools (10a) deviates from a set degree of utilization; and if so to
indicate (S103) a change of utilization pattern of said at least one tightening tool (10a) such that the degree of utilization of said at least one tightening tool (10a) complies with the set degree of utilization following the change.
